# EUROPÄISCHE PATENTSCHRIFT

(11) **EP 0 428 522 B1**
(45) Veröffentlichungstag und Bekanntmachung des Hinweises auf die Patenterteilung: **15.09.1993**
(21) Anmeldenummer: 89906052.9
(22) Anmeldetag: 02.06.1989
(51) Int. Cl.: H04J 3/08

(54) **VERFAHREN ZUM EIN- UND AUSKOPPELN VON SIGNALEN IN BZW. AUS TEILBEREICHEN DER ZUSATZSIGNALE VON TRANSPORTMODULEN EINER SYNCHRONEN DIGITALSIGNAL-HIERARCHIE**
PROCESS FOR SWITCHING SIGNALS INTO OR OUT OF SUBDOMAINS OF THE SUPPLEMENTARY SIGNALS OF TRANSMISSION MODULES OF A SYNCHRONOUS DIGITAL SIGNAL HIERARCHY
PROCEDE POUR CONNECTER ET DECONNECTER DES SIGNAUX DANS OU A PARTIR DE SOUS-DOMAINES DES SIGNAUX SUPPLEMENTAIRES DE MODULES DE TRANSMISSION D'UNE HIERARCHIE SYNCHRONE DE SIGNAUX NUMERIQUES

(30) Priorität: 06.06.1988 DE 3819259
(43) Veröffentlichungstag der Anmeldung: 29.05.1991
(73) Patentinhaber: Philips Patentverwaltung GmbH, 22335 Hamburg (DE); Philips Electronics N.V., 5621 BA Eindhoven (NL); SIEMENS AKTIENGESELLSCHAFT, 80333 München (DE)
(72) Erfinder: WEIMERT, Günter, D-8000 München 71 (DE); VOLEJNIK, Wilhelm, D-8029 Sauerlach (DE); LECHLER, Walter, D-8000 München 21 (DE); MUSIL, Gerhard, D-8000 München 71 (DE); FIEDLER, Udo, D-8566 Leinburg (DE)
(74) Vertreter: Fuchs, Franz-Josef, Dr.-Ing.
(86) Internationale Anmeldenummer: DE8900366
(87) Internationale Veröffentlichungsnummer: WO8912365

(56) Entgegenhaltungen:
- US-A- 4 574 375
- Globecom '85, IEEE Global Telecommunications Conference, New Orleans, Louisiana, vol. 3, 2-5 December 1985, IEEE; R.J. Boehm et al.: "SONET (Synchronous Optical Network)", Seiten 1443-1450
- The Sixth International Symposium on Subscribers Loops and Services, ISSLS '84, Nice, 1-4 October 1984; G. Heydt et al.: "1.12 GBIT/S optical sub- scriber loop for transmission of high definition television signals", Seiten 289-293
- Siemens/Telcom Report, vol. 10, March 1987 (Erlangen, DE); M. Krohn et al.: "Multiplexen und Abzweigen von Fernsprech- und Datensignalen", Seiten 43-50
- IEEE Journal of Solid-State Circuits, vol. 23, no. 1, February 1988, IEEE (New York, US); H.J. Chao et al.: "A 140 Mbit/s CMOS LSI framer chip for a broad-band ISDN local access system", Seiten 133-141

## Beschreibung

Die Erfindung bezieht sich auf ein Verfahren zum Auskoppeln von Signalen aus mindestens einem Teilbereich von Zusatzsignalen und zum Einkoppeln von neuen oder veränderten Signalen in mindestens einen freien oder freigewordenen Teilbereich von Transportmoduln einer synchronen Digitalsignal-Hierarchie gemäß den CCITT-Empfehlungsentwürfen G.70X, G.70Y und G.70Z, nach denen der Rahmen der Transportmoduln aus 9 Reihen und N-mal 270 Spalten (N = ganze Zahl) für jeweils ein Byte pro Reihe und Spalte besteht und eine Verwaltungseinheit zur Aufnahme von virtuellen Containern enthält, deren Rahmenanfang durch Zeiger markiert wird.

In dem "CCITT Red Book", Volume III - Fascicle III.3, Digital Networks-Transmission Systems and Multiplexing Equipment, Genf, 1985, Seite 41 sind genormte Bitraten zwischen 64 kbit/s und 139 264 kbit/s aufgelistet.

Aus der Zeitschrift "Telecommunications", März 1988, Seiten 63, 65 und 66 sind synchrone Digitalsignal-Hierarchien für internationalen Gebrauch beschrieben, die unter den Bezeichnungen SONET (Synchronous Optical Network) und NNI (Network Node Interface) bekannt sind.

Die bereits genannten CCITT-Empfehlungsentwürfe beinhalten NNI-Definitionen. In der untersten Hierarchiestufe werden Digital-Signale einer Bitrate von 155 520 kbit/s übertragen. Ihr Pulsrahmen ist als synchroner Transportmodul STM-1 bezeichnet. Die nächste Hierarchiestufe ist für die vierfache Bitrate 622 080 kbit/s und synchrone Transportmoduln STM-4 bestimmt. Synchrone Transportmoduln STM-8, STM-12 und STM-16 sind möglich. In diesen Transportmoduln sind neben den Nutzsignalen Zusatzsignale wie Abschnittsrahmenkopf (section overhead), Pfadrahmenkopf (path overhead), Zeiger (pointer) und feste Stopfbits (fixed stuff) enthalten.

Aus der Druckschrift "GLOBECOM'85 IEEE, Global Telecommunications Conference, Conference Record Volume 3 of 3, New Orleans, Louisiana, 2-5.12.1985, Seiten 1443 bis 1450, insbesondere Fig. 11 ist ein Add Drop Multiplexer bekannt. Dieser dient zum Multiplexen von STS-Signalen und auch zum Auskoppeln von STS-1-Signalen aus ankommenden STS-N-Signalen einer höheren Hierarchiestufe. STS-Signale bestehen aus Pulsrahmen mit einem Kopf für Zusatzsignale und einem Hauptteil für zu transportierende Signale, die wiederum selbst Zusatzsignale in Form eines Pfadrahmenkopfes enthalten können. Ein Ein- und Auskoppeln von Zusatzsignalen oder Teilbereichen von diesen ist nicht vorgesehen.

Aus der US-Patentschrift 4,574,375 ist schließlich eine Schnittstellenanordnung für ein Fernsprechsystem oder ähnliches bekannt. Bei dieser werden auf einer Sammelleitung ankommende vollständige Digitalsignale ihrem in einem Pulsrahmen verschachtelten Kanal zu einer Bearbeitung wie Signalpegeleinstellung, Dualton-Mehrfrequenz-Signalisierung oder Netzechoentfernung entnommen und anschließend auf eine Sammelleitung zurückgegeben. Auch hierbei werden weder Zusatzsignale noch Teilbereiche von diesen separat ein- oder ausgekoppelt.

Aufgabe der Erfindung ist es, Signale aus Teilbereichen dieser Zusatzsignale eines Transportmoduls auszukoppeln und möglichst flexibel weiterverarbeitbar zur Verfügung zu stellen sowie umgekehrt Signale in derartige Teilbereiche einzukoppeln.

Diese Aufgabe wird erfindungsgemäß mit den im Patentanspruch 1 aufgeführten Merkmalen gelöst.

Ausgestaltungen des Verfahrens sind den Unteransprüchen zu entnehmen.

Anhand von Ausführungsbeispielen wird die Erfindung nachstehend näher erläutert.
- Figur 1: zeigt einen Transportmodul STM-1 mit einem virtuellen Container VC-4,
- Figur 2: zeigt einen Transportmodul STM-1 mit einem virtuellen Container VC-4 und vier viertuellen Containern VC-31,
- Figur 3: zeigt einen Transportmodul STM-1 mit einem virtuellen Container VC-4 und drei virtuellen Containern VC-32,
- Figur 4: zeigt einen Abschnittsrahmenkopf für einen Transportmodul STM-1,
- Figur 5: zeigt einen Transportmodul STM-N,
- Figur 6: zeigt ein Pulsdiagramm zur Erläuterung der Signalspreizung,
- Figur 7: zeigt eine erste Busanordnung,
- Figur 8: zeigt eine zweite Busanordnung und
- Figur 9: zeigt eine Weiterverarbeitung der Busdaten.

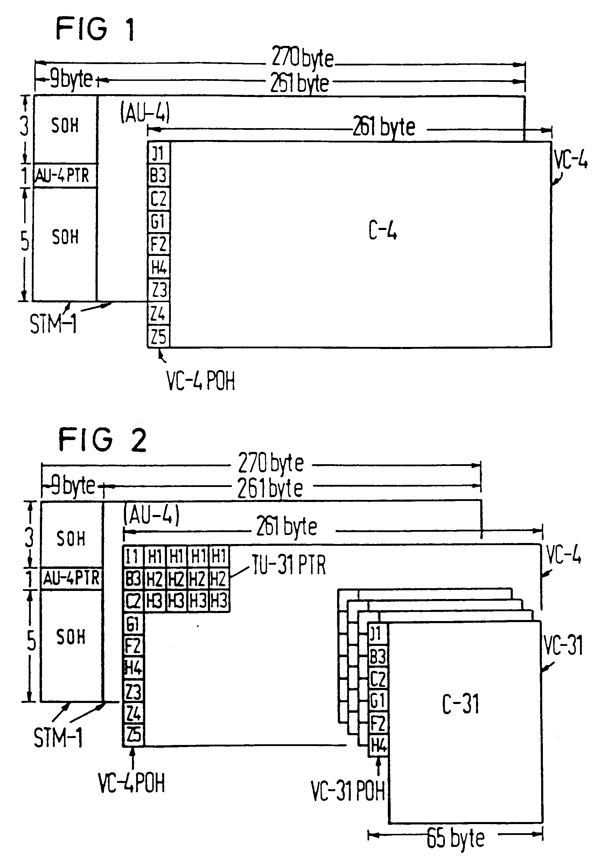

Figur 1 zeigt einen bekannten synchronen Transportmodul STM-1. Dieser ist in den Abschnittsrahmenkopf SOH, eine Verwaltungseinheit (administration unit) AU-4 und einen Verwaltungseinheitszeiger (administration unit pointer) AU-4 PTR unterteilt. In die Verwaltungseinheit AU-4 kann ein virtueller Container VC-4 eingefügt werden, wobei der Verwaltungseinheitszeiger AU-4 PTR angibt, wo der virtuelle Container VC-4 in der Verwaltungseinheit AU-4 anfängt. Der virtuelle Container VC-4 besteht wiederum aus einem Pfadrahmenkopf VC-4 POH und einem Container C-4. Letzterer dient der Aufnahme eines 139 264-kbit/s-Signals. Im Pfadrahmenkopf VC-4 POH befinden sich Bytes mit definierten Zusatzsignalen, die den Inhalt des Containers C-4 bis zum Demuitiplexen begleiten.

Der Transportmodul STM-1 besteht aus 9 Reihen und 270 Spalten bzw. Bytes. Der Abschnittsrahmenkopf SOH und der Verwaltungseinheitszeiger AU-4 PTR nehmen 9 Spalten bzw. Bytes ein. Für die Verwaltungseinheit AU-4 bzw. den virtuellen Container VC-4 bleiben 261 Spalten bzw. Bytes. 1 byte enthält 8 bit.

Figur 2 zeigt, wie in bekannter Weise vier virtuelle Container VC-31 in den virtuellen Container VC-4 eingefügt werden können. Die virtuellen Container VC-31 bestehen aus einem Pfadrahmenkopf VC-31 POH, der 1-byte-breit ist und sich über die ersten sechs Reihen erstreckt, und einen Container C-31, der 64-byte-breit ist. Nach Einfügen der vier virtuellen Container VC-31 in den virtuellen Container VC-4 bleibt in diesem Platz für vier Transporteinheitszeiger TU-31 PTR.Ein Container C-31 kann ein 34 368-kbit/s-Signal aufnehmen.

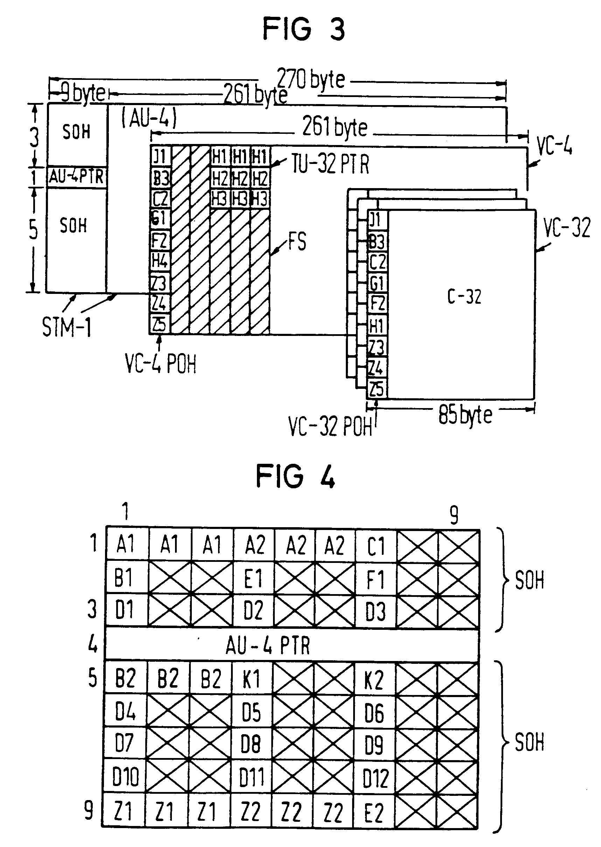

Figur 3 zeigt das bekannte Einfügen von drei virtuellen Containern VC-32 in einen virtuellen Container VC-4. Ein virtueller Container VC-32 besteht aus einem 1-byte-breiten Pfadrahmenkopf VC-32 POH und einem 84-byte-breiten Container C-32. Nach Einfügen der drei virtuellen Container VC-32 in den virtuellen Container VC-4 bleibt Platz für drei Transporteinheitszeiger TU-32 PTR und für feste Stopfbits FS. Ein Container C-32 kann ein 44 736-kbit/s-Signal aufnehmen.
figur 4 zeigt den Abschnittsrahmenkopf SOH detailliert. Die mit Buchstaben versehenen Bytes sind in den genannten CCITT-Empfehlungsentwürfen definiert. Die mit einem Kreuz versehenen Bytes sind noch frei verfügbar.

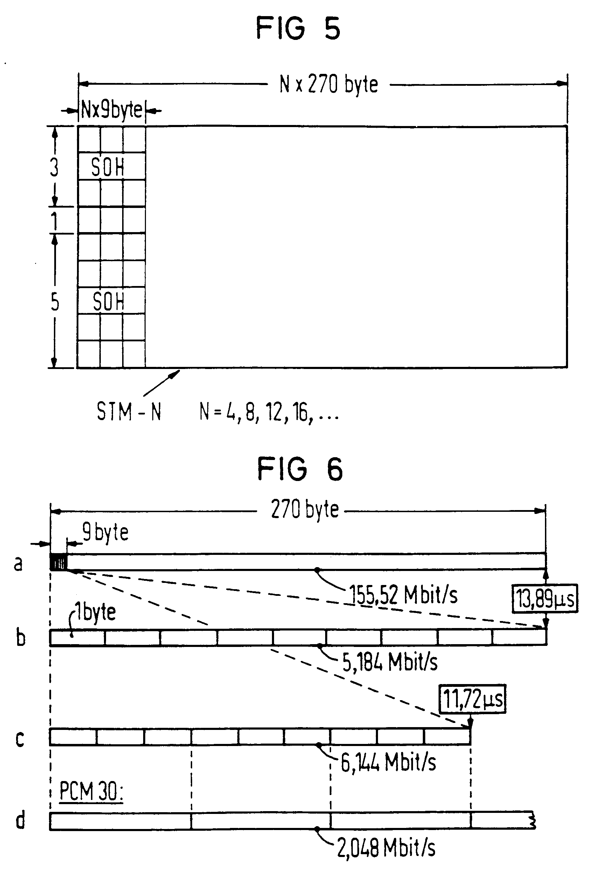

Figur 5 zeigt einen bekannten Transportmodul STM-N höherer Ordnung, dessen Spaltenzahl N-mal größer als die des Transportmoduls STM-1 ist. Der Abschnittsrahmenkopf hat entsprechend N-mal soviel Spalten. Setzt man N = 4, dann können in den Transportmodul STM-4 vier Transportmodule STM-1 untergebracht werden.

Insbesondere die in den Figuren 1 bis 5 gezeigten speziellen Teilbereiche SOH, AU-4 PTR VC-4 POH, VC-31 POH, VC-32 POH, TU-31 PTR, TU-32 PTR und FS können für das erfindungsgemäße Ein- und Auskoppeln vorgesehen werden. Dabei kann man sich auch auf frei zur Verfügung stehende Bytes beschränken, wie sie in Figur 4 durch Kreuze angezeigt sind.

Figur 6 zeigt ein erfindungsgemäßes Auskoppeln des Abschnittsrahmenkopfes SOH und des Verwaltungseinheitszeigers AU-4 PTR eines Transportmoduls STM-1. a zeigt eine Reihe des Transportmoduls STM-1 und b die über die gesamte Reihe gespreizten 9 byte. Die Verarbeitungsgeschwindigkeit dieser Bytes ist damit um einen Faktor 1/30 reduziert. Die Spreizung auf die komplette Reihenlänge kann auch geringfügig modifiziert werden, wobei vorteilhafterweise die Übertragungsrate des plesiochronen Grundbündels eines POM30-Systems Berücksichtigung findet. c zeigt eine entspre-chende Spreizung und d zum Vergleich drei Bytes eines PCM30-Systems. Die Berücksichtigung eines PCM24-Systems erfolgt sinngemäß.

Der Spreizungsfaktor ist in beiden Fällen geringfügig kleiner, da die 9 byte nicht mehr den vollständigen Zeitraum der Reihe in Anspruch nehmen. Dabei kann der Lesetakt für die Bits der 9 byte entweder systemintern durch Teilung erzeugt oder von außen zugeführt werden.

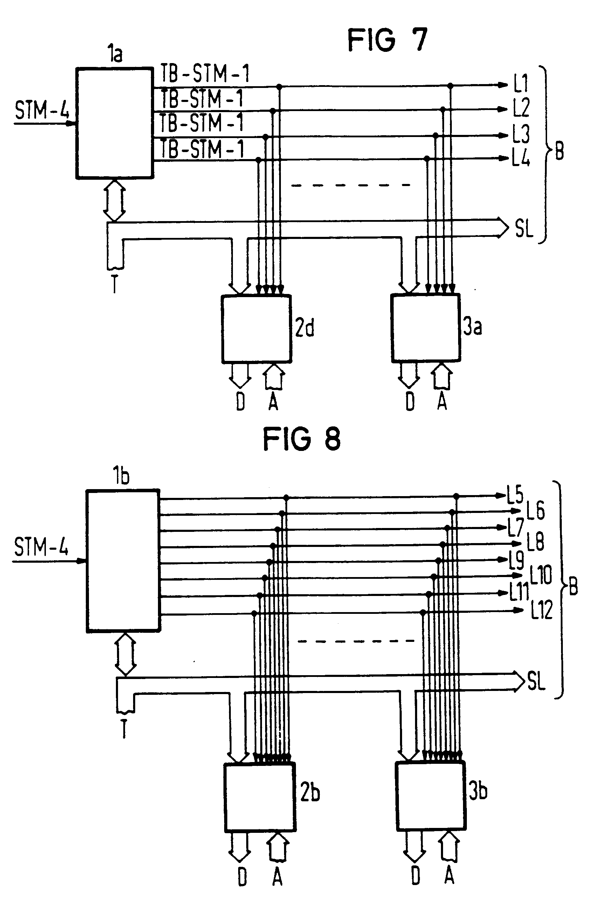

Figur 7 zeigt eine Variante des Auskoppelns von Signalen aus Teilbereichen eines Transportmoduls STM-4 mit einer Demultiplex- und Spreizeinrichtung 1a und Kundenschnittstellen 2a und 3a.

Der Demultiplex- und Spreizeinrichtung 1a wird ein Transportmodul STM-4 zugeführt. Sie gibt dann zueinander synchron auf vier Leitungen L1 bis L4 jeweils seriell ausgekoppelte Teilbereichsignale TB-STM-1 jeweils eines im Transportmodul STM-4 enthaltenen Transport-moduls STM-1 ab. Auf dem Teilbus SL laufen Steuersignale T. Die vier Leitungen L1 bis L4 und der Teilbus SL bilden zusammen den Bus B. Über die Kundenschnittstellen 2a und 3a können aus dem Bus B nach einer Eingabe von Adressen A die entsprechenden Bytes D entnommen werden.

Die Variante in der Figur 8 unterscheidet sich von der nach der Figur 7 dadurch, daß die Demultiplex- und Spreizungseinrichtung 1b die Bytes der Transportmoduln STM-1 nacheinander bitparallel auf acht Leitungen L5 bis L12 abgibt.

Es sind auch andere Busstrukturen, beispielsweisen mit Daten-und Adressenbus, denkbar, die direkt an Mikroprozessorsysteme angepaßt sind.

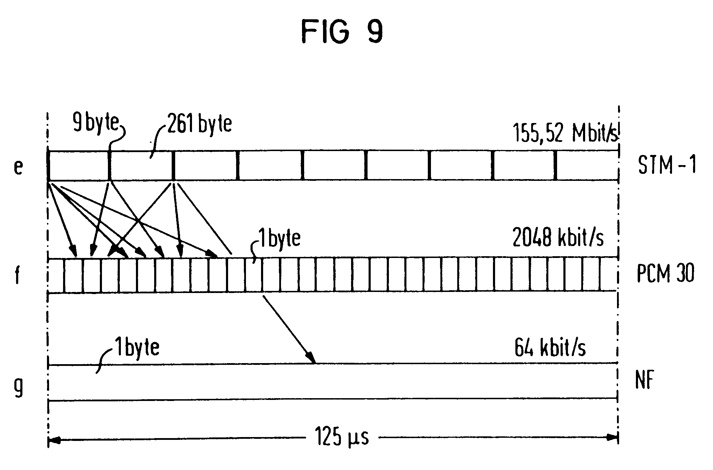

Anhand der Figur 9 wird erläutert, daß in kundenspezifischen Einheiten durch Voreinstellung von Adressen A einzelne Bytes oder beliebig gruppierte Bündel von Bytes für jeweilige Kunden zusammengefaßt werden können. e zeigt einen Transportmodul STM-1, von dem eine Reihe bereits in Figur 6 unter a gezeigt wurde. In e sind durch senkrechte Striche angedeutet 9 Bündel zu jeweils 9 byte gezeigt. Diese werden in bestimmter Weise ausgewählt und sortiert in den Pulsrahmens eines PCM30-Systems eingefügt (f). Es kann aber auch 1 byte an einen NF-Kanal g einer Bitrate von 64-kbit/s abgegeben werden.

## Patentansprüche

1. Verfahren zum Auskoppeln von Signalen aus mindestens einem Teilbereich der Zusatzsignale und zum Einkoppeln von Signalen in mindestens einen Teilbereich der Zusatzsignale von Transportmoduln (STM-N) einer synchronen Digitalsignal-Hierarchie gemäß den CCITT-Empfehlungsentwürfen G.70X, G.70Y und G.70Z, nach denen der Rahmen der Tansportmoduln (STM-N) aus 9 Reihen und N-mal 270 Spalten (N = ganze Zahl) für jeweils ein Byte pro Reihe und Spalte besteht und eine Verwaltungseinheit (AU-4) zur Aufnahme von virtuellen Containern (VC-4, VC-31, VC-32) enthält, deren Rahmenumfang durch Zeiger (AU-4 PTR, TU-31 PTR, TU-32 PTR) markiert wird,
**dadurch gekennzeichnet,**
daß zum Auskoppeln die Teilbereiche aus dem Transportmodul (STM-N) abgetrennt werden,
daß die Teilbereiche gespreizt werden,
daß die gespreizten Teilbereiche seriell oder parallel zusammen mit zusätzlichen Steuersignalen zu einem Bus (B) zusammengefaßt werden,
daß Bytes oder Bytegruppen aus dem Bus (B) als Signal abgetrennt und abgegeben werden und
daß zum Einkoppeln diese Verfahrensschritte in umgekehrter Reihenfolge und im entgegengesetzten Sinn durchgeführt werden.

2. Verfahren nach Anspruch 1 für Transportmoduln (STM-N) höherer Ordnung,
**dadurch gekennzeichnet,**
daß vor dem Auskoppeln ein Transportmodul höherer Ordnung in Transportmoduln einer niederen Ordnung zerlegt wird und daß beim Einkoppeln im entsprechenden Verfahrensschritt Transportmoduln niederer Ordnung zu einem Transportmodul höherer Ordnung zusammengesetzt werden.

3. Verfahren nach Anspruch 1 für Transportmoduln (STM-N) höherer Ordnung,
**dadurch gekennzeichnet,**
daß beim Auskoppeln aus Teilbereichen, die aus Teilbereichen mehrerer Transportmoduln gebildet sind, diese nach dem Spreizen getrennt werden und
daß beim Einkoppeln im entsprechenden Verfahrensschritt mehrere Teilbereiche vor dem Pressen zusammengefügt werden.

4. Verfahren nach Anspruch 1, 2 oder 3,
**dadurch gekennzeichnet,**
daß Bytes aus virtuellen Containern (VC-4, VC-31, VC-32) für das Abtrennen über die Stellungen der jeweiligen Zeiger (AU-4 PTR, TU-31 PTR, TU-32 PTR) ermittelt werden und
daß derartige Bytes beim Einkoppeln entsprechend eingefügt werden.

5. Verfahren nach Anspruch 1 oder 4,
**dadurch gekennzeichnet,**
daß die Bitrate des gespreizten Signals derart gewählt wird, daß sie ein Einfaches oder ein ganzzahliges Vielfaches einer von CCITT genormten Bitrate ist, oder
daß die Größe der Teilbereiche derart gewählt wird, daß sich für ihre Summe nach dem Spreizen eine Bitrate ergibt, die ein Einfaches oder ein ganzzahliges Vielfaches einer von CCITT genormten Bitrate ist.

6. Verfahren nach Anspruch 1,
**dadurch gekennzeichnet,**
daß ein oder mehrere Abschnittsrahmenköpfe (SOH), ein oder mehrere Pfadrahmenköpfe (VC-4 POH, VC-31 POH, VC-32 POH),
ein oder mehrere Zeiger (AU-4 PTR, TU-31 PTR, TU-32 PTR) oder für festes Stopfen ausgewiesene Bereiche (FS) als Teilbereich gewählt sind.

7. Verfahren nach Anspruch 2 oder 3,
**dadurch gekennzeichnet,**
daß die Bytes aus jeweils einem Transportmodul der niederen Ordnung im Bus (B) seriell auf einer eigenen Leitung (L1-L4) übertragen werden.

8. Verfahren nach Anspruch 2 oder 3,
**dadurch gekennzeichnet,**
daß die ausgekoppelten Bytes im Bus (B) auf acht Leitungen (L5-L12) bitparallel übertragen werden.

9. Verfahren nach Anspruch 1, 7 oder 8,
**dadurch gekennzeichnet,**
daß aus dem Bus (B) abgetrennte Bytes oder Bytegruppen sortiert und zu wenigstens einem neuen Zeitmultiplexsignal zusammengestellt werden.

10. Verfahren nach Anspruch 7 oder 8,
**dadurch gekennzeichnet,**
daß die Byteauswahl aus dem Bus (B) örtlich über Schalter oder ferngesteuert über Steuerbusse getroffen wird.

11. Verfahren nach Anspruch 1, 7 oder 8,
**dadurch gekennzeichnet,**
daß im Bus (B) nur frei zur Verfügung stehende Bytes zusammengefaßt werden und eine Kennung der frei zur Verfügung stehenden Bytes übertragen werden kann.

12. Verfahren nach Anspruch 1,
**dadurch gekennzeichnet,**
daß zusätzliche Steuersignale (T) Rahmen-, Bit-, Byte-, Byte-gruppen-, Abschnittsrahmenkopfreihen- und Spreizungsbit-Takt oder extern erzeugte Steuersignale sein können.

## Claims

1. Process for coupling signals out of at least one sub-area of the supplementary signals and for coupling signals into at least one sub-area of the supplementary signals of transport modules (STM-N) of a synchronous digital signal hierarchy according to CCITT Draft Recommendations G.70X, G.70Y and G.70Z, according to which the frame of the transport modules (STM-N) comprises 9 rows and N times 270 columns (N = integer) in each case for one byte per row and column, and contains an administration unit (AU-4) for receiving virtual containers (VC-4, VC-31, VC-32), the frame extent of the latter being indicated by pointers (AU-4 PTR, TU-31 PTR, TU-32 PTR), characterised in that, for coupling out, the sub-areas are separated from the transport module (STM-N), in that the sub-areas are spread, in that the spread sub-areas are combined in series or in parallel together with additional control signals to form a bus (B), in that bytes or groups of bytes are separated from the bus (B) as signals and are output, and in that, for coupling in, the steps of this process are performed in the reverse and opposite order.

2. Process according to Claim 1 for higher-order transport modules (STM-N), characterised in that before the coupling out, a higher-order transport module is broken down into lower-order transport modules, and in that during coupling in, lower-order transport modules are combined to form a higher-order transport module in the corresponding step of the process.

3. Process according to Claim 1 for higher-order transport modules (STM-N), characterised in that during coupling out from sub-areas that are formed from sub-areas of a plurality of transport modules, the latter are separated after the spreading, and in that during coupling in, a plurality of sub-areas are combined before compression in the corresponding step of the process.

4. Process according to Claim 1, 2 or 3, characterized in that, for the separation, bytes from virtual containers (VC-4, VC-31, VC-32) are determined by the positions of the respective pointers (AU-4 PTR, TU-31 PTR, TU-32 PTR), and in that bytes of this type are correspondingly inserted during coupling in.

5. Process according to Claim 1 or 4, characterized in that the bit rate of the spread signal is selected in such a way that it is a bit rate standardized by CCITT or an integer multiple thereof, or that the size of the sub-areas is selected in such a way that a bit rate that is a bit rate standardized by CCITT or an integer multiple thereof is obtained as its sum after the spreading.

6. Process according to Claim 1, characterized in that one or more section overheads (SOH), one or more path overheads (VC-4 POH, VC-31 POH, VC-32 POH), one or more pointers (AU-4 PTR, TU-31 PTR, TU-32 PTR) or areas (FS) designated for fixed stuffing are selected as sub-areas.

7. Process according to Claim 2 or 3, characterized in that the bytes from in each case one lower-order transport module are transmitted serially on the bus (B) on a separate line (L1-L4).

8. Process according to Claim 2 or 3, characterized in that the coupled-out bytes are transmitted bit-parallel on the bus (B) on eight lines (L5-L12).

9. Process according to Claim 1, 7 or 8, characterized in that bytes or byte groups separated from the bus (B) are sorted and are combined to form at least one new time-division multiplex signal.

10. Process according to Claim 7 or 8, characterized in that the byte selection from the bus (B) is made locally by means of switches or remotely by means of control buses.

11. Process according to Claim 1, 7 or 8, characterized in that only freely available bytes are combined on the bus (B) and a marker of the freely available bytes can be transmitted.

12. Process according to Claim 1, characterized in that additional control signals (T) may be frame, bit, byte, byte group, section overhead row and spread bit clock or externally generated control signals.

## Revendications

1. Procédé pour découpler des signaux provenant d'au moins une zone partielle des signaux supplémentaires et pour injecter des signaux dans au moins une zone partielle des signaux supplémentaires de modules de transport (STM-N) d'une hiérarchie synchrone de signaux numériques conformément aux projets de recommandations CCITT G.70X, G.70Y et G.70Z, selon lesquels la trame des modules de transport (STM-N) se compose de 9 lignes et de N fois 270 colonnes (N = nombre entier) pour respectivement un octet pour chaque ligne et chaque colonne, et contient une unité de gestion (AU-4) servant à recevoir des conteneurs virtuels (VC-4, VC-31, VC-32), dont le pourtour du cadre est marqué par des pointeurs (AU-4 PTR, TU-31 PTR, TU-32 PTR),
caractérisé par le fait
que pour le découplage, les zones partielles sont séparées du module de transport (STM-N),
que les zones partielles sont dilatées,
que les zones partielles dilatées sont réunies en série ou en parallèle avec des signaux supplémentaires de commande pour former un bus (B),
que des octets ou des groupes d'octets sont séparés du bus (B) en tant que signal et sont délivrés, et
que pour l'injection, ces étapes opératoires sont exécutées selon la séquence inverse et en sens opposé.

2. Procédé suivant la revendication 1 pour des modules de transport (STM-N) d'ordre supérieur
caractérisé par le fait
qu'avant le découplage, un module de transport de rang supérieur est subdivisé en des modules de transport d'un rang inférieur et que lors de l'injection, dans l'étape opératoire correspondante, des modules de transport de rang inférieur sont réunis pour former un module de transport de rang supérieur.

3. Procédé suivant la revendication 1 pour des modules de transport (STM-N) de rang supérieur,
caractérisé par le fait
que lors du découplage à partir de zones partielles, qui sont formées à partir de zones partielles de plusieurs modules de transport, ces zones sont séparées après la dilatation, et
que lors de l'injection, pendant l'étape opératoire correspondante, plusieurs zones partielles sont réunies avant la compression.

4. Procédé suivant la revendication 1, 2 ou 3,
caractérisé par le fait
que des octets sont déterminés à partir de conteneurz virtuels (VC-4, VC-31, VC-32) pour la séparation en fonction des positions des pointeurs respectifs (AU-4 PTR, TU-31 PTR, TU-32 PTR), et
que de tels octets sont insérés de façon correspondante lors de l'injection.

5. Procédé suivant la revendication 1 ou 4,
caractérisé par le fait
que la cadence binaire du signal dilaté est choisi de manière à être égale à une cadence binaire normalisée par le CCITT ou un multiple entier d'une telle cadence, ou
que la taille des zones partielles est choisie de manière à obtenir, pour la somme de ces zones, après dilatation, une cadence binaire qui est égale à une cadence binaire normalisée pour le CCITT ou à un multiple entier d'une telle cadence.

6. Procédé suivant la revendication 1, caractérisé par le fait qu'une ou plusieurs en-têtes de trames de sections (SOH), une ou plusieurs têtes de trames de voies (VC-4 POH, VC-31 POH, VC-32 POH), un ou plusieurs pointeurs (AU-4 PTR, TU-31 PTR, TU-32 PTR) ou des zones (FS) exclues pour un bourrage fixe sont choisies en tant que zone partielle.

7. Procédé suivant la revendication 2 ou 3, caractérisé par le fait que les octets constitués par respectivement un module de transport de rang inférieur sont transmis en série dans le bus (B) dans une ligne particulière (L1-L4).

8. Procédé suivant la revendication 2 ou 3, caractérisé par le fait que les octets découplés sont transmis dans le bus (B) en parallèle au niveau des bits dans huit lignes (L5-L12).

9. Procédé suivant la revendication 1, 7 ou 8, caractérisé par le fait que des octets ou des groupes d'octets, séparés du bus (B), sont triés et réunis pour former au moins un nouveau signal de multiplexage temporel.

10. Procédé suivant la revendication 7 ou 8, caractérisé par le fait que le choix des octets à partir du bus (B) est réalisé localement au moyen d'interrupteurs ou d'une manière télécommandée par l'intermédiaire de bus de commande.

11. Procédé suivant la revendication 1, 7 ou 8, caractérisé par le fait que seuls trois octets disponibles sont réunis dans le bus (B) et qu'une identification des octets librement disponibles peut être transmise.

12. Procédé suivant la revendication 1, caractérisé par le fait que des signaux de commande supplémentaires (T) peuvent être des signaux de cadence de trames, de bits, d'octets, de groupes d'octets, de séries d'en-têtes de trames de section et de bits de dilatation ou des signaux de commande produits de façon externe.
